Europäisches Patentamt

European Patent Office

Office européen des brevets

(11) Veröffentlichungsnummer: **0 070 979**
**B1**

# (12) EUROPÄISCHE PATENTSCHRIFT

(45) Veröffentlichungstag der Patentschrift:
11.09.85

(21) Anmeldenummer: 82103960.9

(22) Anmeldetag: 06.05.82

(51) Int. Cl.⁴: **F 16 C 13/04**, F 16 C 17/06

(54) **Lagersegment mit einem Gleitschuh.**

(30) Priorität: 23.07.81 DE 3129066

(43) Veröffentlichungstag der Anmeldung:
09.02.83 Patentblatt 83/6

(45) Bekanntmachung des Hinweises auf die Patenterteilung:
11.09.85 Patentblatt 85/37

(84) Benannte Vertragsstaaten:
AT BE DE FR GB IT SE

(56) Entgegenhaltungen:
DE - A - 2 322 579
DE - A - 2 813 759
DE - A - 2 908 513
DE - B - 2 049 402

(73) Patentinhaber: Krupp Polysius AG,
Graf-Galen-Strasse 17, D-4720 Beckum (DE)

(72) Erfinder: Heinemann, Otto, Ing. (grad.), Galileistrasse 8,
D-4722 Ennigerloh (DE)
Erfinder: Heiringhoff, Burkhard, Ing, (grad.),
Theodor-Heuss-Strasse 19, D-4740 Oelde (DE)
Erfinder: Lücke, Helmut, Ing. (grad.), Zum Igelsbusch 2,
D-4720 Beckum 2 (DE)
Erfinder: Schössler, Werner, Ing. (grad.),
Zeppelinstrasse 22, D-4730 Ahlen (DE)
Erfinder: Krumme, Helmut, Königstrasse 29,
D-4724 Wadersloh (DE)

(74) Vertreter: Tetzner, Volkmar, Dr.-Ing. Dr. Jur.,
Van-Gogh-Strasse 3, D-8000 München 71 (DE)

## Beschreibung

Die Erfindung betrifft ein Lagersegment entsprechend dem Oberbegriff des Patentanspruches.

Lagersegmente mit kipp- und drehbeweglich abgestützten Gleitschuhen werden zur Gleitlagerung großer rotierender Maschinenteile, wie Rohrmühlen, Trommeltrocknern usw., verwendet, wobei die Lagersegmente — je nach Ausgestaltung — sowohl zur axialen als auch zur radialen Abstützung dieser rotierenden Maschinenteile benutzt werden. Da vor allem bei sehr großen rotierenden Maschinenteilen Taumelbewegungen nicht zu vermeiden sind, müssen die Gleitschuhe dieser Lagersegmente kipp- und drehbeweglich auf dem Lagerfuß abgestützt sein, um den Bewegungen des rotierenden Maschinenteiles einwandfrei folgen zu können.

Zur radialen Abstützung eines großen rotierenden Maschinenteiles ist ein Lagersegment bekannt (DE-A-2 908 513), bei dem der zwischen dem Gleitschuh und dem Lagerfuß angeordnete, die radialen Abstützkräfte übertragende Lagerkörper durch zwei Ringe mit Kugelsegmentflächen gebildet wird. Außerdem ist zur zusätzlichen Führung des Gleitschuhes bei Kipp- und Schwenkbewegungen ein Radialgelenklager vorgesehen, dessen Achse radial verläuft, das somit keine radialen Abstützkräfte überträgt.

Zur radialen Abstützung eines großen rotierenden Maschinenelementes ist ferner ein Lagersegment bekannt (DE-A-2 322 579), bei dem zwei Rollen auf den beiden Armen eines Schwinghebels gelagert sind, der über ein Kugelgelenk an einem ortsfesten Lagerfuß abgestützt ist.

Zur axialen Abstützung eines großen rotierenden Maschinenteiles ist weiterhin ein Lagersegment entsprechend dem Oberbegriff des Patentanspruches bekannt (DE-A-2 813 759), bei dem der Gleitschuh über eine Narbe, d. h. über einen verhältnismäßig kleinen, ansatzartigen Vorsprung, kippbeweglich am Lagerfuß abgestützt ist.

Der Erfindung liegt die Aufgabe zugrunde, ein zur axialen Abstützung eines großen rotierenden Maschinenteiles dienendes Lagersegment entsprechend dem Oberbegriff des Patentanspruches so auszubilden, daß sich eine besonders einfache und raumsparende Ausbildung ergibt und eine Abstützung in beiden axialen Richtungen erreicht wird.

Diese Aufgabe wird erfindungsgemäß durch die kennzeichnenden Merkmale des Patentanspruches gelöst.

Da bei dem erfindungsgemäßen Lagersegment ein Radialgelenklager in handelsüblicher Ausführung verwendet werden kann und weitere Lagerkörper nicht erforderlich sind, ergibt sich eine sehr einfache und raumsparende Bauweise. Die erfindungsgemäße Gestaltung ermöglicht dabei auf besonders einfache Weise eine Abstützung des rotierenden Maschinenteiles in beiden axialen Richtungen.

Ein Ausführungsbeispiel der Erfindung ist in der Zeichnung veranschaulicht. Es zeigt

Fig. 1 einen Schnitt durch ein Ausführungsbeispiel des erfindungsgemäßen Lagersegmentes, das in Eingriff mit einem rotierenden Maschinenteil steht,

Fig. 2 eine Seitenansicht des Lagersegmentes in Richtung des Pfeiles II der Fig. 1.

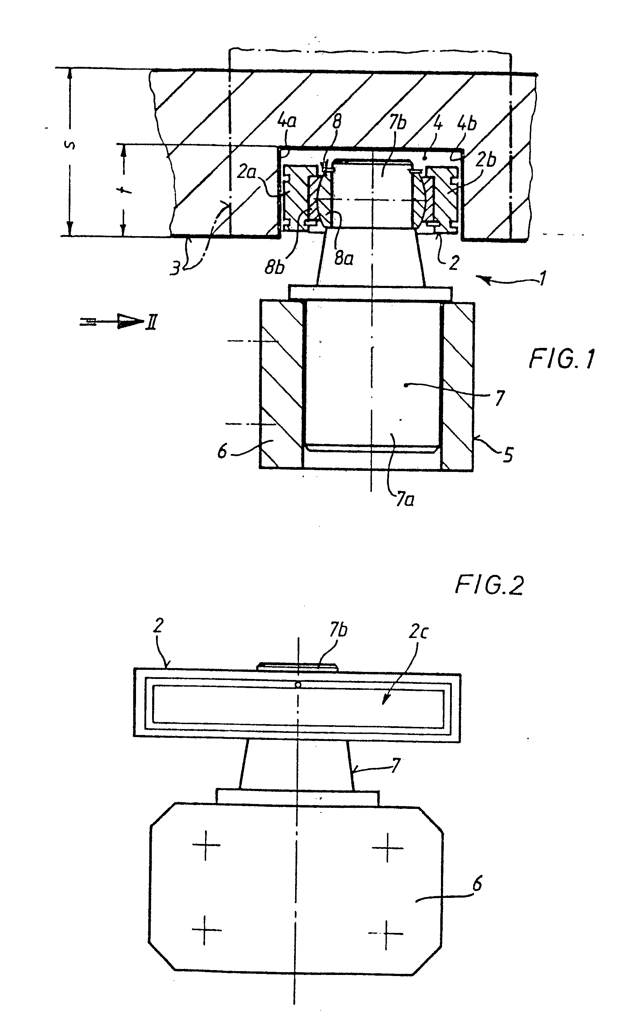

Das in den Fig. 1 und 2 dargestellte Lagersegment 1 enthält einen Gleitschuh 2, der zur axialen Abstützung eines großen rotierenden Maschinenteiles 3 bestimmt ist. Dieser Maschinenteil 3 enthält an seinem Umfang eine Ringnut 4, in die der Gleitschuh 2 eingreift.

Zu der Größe der Ringnut 4 im Maschinenteil 3 sei erwähnt, daß für diese ein verhältnismäßig kleiner Querschnitt angestrebt wird, wobei vor allem die Nuttiefe $t$ klein gehalten werden soll, damit die Wanddicke $s$ im Nutenbereich des Maschinenteiles 3 so klein wie möglich gehalten werden kann, d. h. es soll eine bestimmte Größe im Verhältnis Nuttiefe zu Wanddicke, also $t : s$ nicht überschritten werden.

Bei dem Maschinenteil 3 kann es sich beispielsweise um die — ggf. verdickte — Zylinderwandung (mittels durchgehender Linien dargestellt) einer Trommel großen Durchmessers oder um einen auf der Trommel angebrachten Laufring bzw. eine entsprechende Laufringbandage (mittels strichpunktierter Linien angedeutet) handeln.

Von besonderer Bedeutung ist die Ausführung der kipp- und drehbeweglichen Abstützung des Gleitschuhes 2 auf einem Lagerfuß des Lagersegments 1. Dieser Lagerfuß 5 selbst kann auf seiner einen Seite mit einer Art Befestigungsplatte ausgebildet sein, mit der er in nicht näher interessierender Weise ortsfest an einem Fundament oder dgl. verschraubt werden kann. In diesem Lagerfuß 5 ist das eine Ende 7a eines Lagerbolzens 7 orts- und drehfest abgestützt, während das andere Lagerbolzenende 7b, das im Durchmesser etwas kleiner gehalten sein kann und in Richtung auf den Maschinenteil 3 bzw. die Ringnut 4 frei vorsteht, ein Radialgelenklager 8 und den Gleitschuh 2 trägt.

Bei dem Radialgelenklager 8 kann es sich um ein handelsüblich ausgeführtes Radialgelenklager handeln. Diese Radialgelenklager 8 ist mit seinem ein inneres Lagerelement bildenden Lagerinnenring 8a auf dem feststehenden Lagerbolzen 7 befestigt, während der Lageraußenring (äußeres Lagerelement) 8b mit dem Gleitschuh 2 fest verbunden ist. Wie an sich bekannt ist, ist der Lageraußenring 8b des Radialgelenklagers 8 begrenzt kugelbeweglich auf dem Lagerinnenring 8a angeordnet, so daß der Gleitschuh 2 über dieses Radialgelenklager 8 kipp- und drehbeweglich (taumelbeweglich) über den Lagerbolzen 7 auf dem Lagerfuß 5 abgestützt ist.

Der Lagerfuß 5 wird gegenüber dem rotierenden Maschinenteil 3 ortsfest so angeordnet, daß der Lagerbolzen 7 mit seinem vorstehenden freien Ende 7b genügend weit in die Ringnut 4 eingreift, so daß deren — axiale — Seitenflanken 4a, 4b mit dem Gleitschuh 2 in Gleitführungseingriff stehen können. Der Gleitschuh 2 ist dabei vorzugsweise als Doppelgleitschuh ausgebildet, d. h. er besitzt zwei gleichartig ausgebildete Gleitschuhelemente 2a, 2b, die mit den entsprechenden Ringnut-Seitenflanken 4a bzw. 4b (in beiden entgegengesetzten axialen Richtungen der Ringnut 4) in Gleitführungseingriff gebracht werden können.

Der Gleitschuh 2 bzw. die Gleitschuhelemente 2a, 2b können generell in jeder geeigneten Weise für eine Gleitlagerführung ausgebildet sein. Besonders bevorzugt wird es jedoch, die Gleitschuhelemente 2a, 2b in Form eines hydrostatisch arbeitenden Lagerschuhes auszubilden, der mit seiner in üblicher Weise (hier nicht näher dargestellt) mit Drucköl gespeisten Tragfläche 2c die eigentliche Gleitlagerfläche des Gleitschuhes 2 gegenüber den Seitenflanken 4a, 4b der Ringnut 4 bildet.

Insbesondere Fig. 1 läßt erkennen, daß die Tiefe t der Ringnut 4 aufgrund der Ausbildung des Lagersegments 1 verhältnismäßig klein gehalten werden kann, so daß auch das weiter oben erwähnte Verhältnis t : s verhältnismäßig klein sein kann, d. h. die Ring- bzw. Führungsnut 4 kann verhältnismäßig flach ausgebildet sein, ohne daß dadurch die gewünschte zuverlässige axiale Führung des Maschinenteiles 3 bzw. die bauliche Stabilität beeinträchtigt werden.

## Patentanspruch

Lagersegment für die axiale Abstützung eines großen rotierenden Maschinenteiles (3), enthaltend

a)    einen ortsfest angeordneten Lagerfuß (5),
b)    einen an dem rotierenden Maschinenteil (3) in axialer Richtung anliegenden Gleitschuh (2), der kipp- und drehbeweglich am Lagerfuß (5) abgestützt ist,

gekennzeichnet durch folgende Merkmale:

c)    zwischen dem Gleitschuh (2) und dem Lagerfuß (5) ist ein Radialgelenklager (8) angeordnet, dessen inneres Lagerelement (8a) auf einem feststehenden Lagerbolzen (7) des Lagerfußes (5) angeordnet ist und dessen äußeres Lagerelement (8b) den Gleitschuh (2) trägt;
d)    der Gleitschuh (2) weist zwei gleichartig ausgebildete Gleitschuhelemente (2a, 2b) auf, die zum Eingriff mit den beiden Seitenflanken (4a, 4b) einer Ringnut (4) des rotierenden Maschinenteiles (3) bestimmt und auf einander abgewandten Seiten des äußeren Lagerelementes (8b) des Radialgelenklagers (8) angeordnet sind.

## Claim

Bearing segment for the axial supporting of a large rotating machine part (3), comprising

a)    a stationary bearing base (5),
b)    an anti-friction shoe (2) which abuts in axial direction against the rotating machine part (3) and which is supported on the bearing base (5) so as to be tiltably and rotatably movable,

characterised by the following features:

c)    a radial ball and socket joint (8) is provided between the anti-friction shoe (2) and the bearing base (5), the inner bearing element (8a) of which is arranged on a stationary bearing pin (7) of the bearing base (5) and the outer bearing element (8b) of which supports the anti-friction shoe (2);
d)    the anti-friction shoe (2) comprises two similarly constructed anti-friction shoe elements (2a, 2b) which are provided for engagement with the two sides (4a, 4b) of an annular groove (4) of the rotating machine part (3) and which are arranged at opposed sides of the outer element (8b) of the radial ball and socket joint (8).

## Revendication

Segment de palier destiné à l'appui axial d'un grand élément rotatif (3) de machine, comprenant:

a)    un pied (5) monté en position fixe,
b)    un patin de guidage (2) appliqué en direction axiale contre l'élément rotatif (3) de machine et prenant appui sur le pied (5) avec mobilité lui autorisant des mouvements de basculement et de pivotement,

caractérisé par les particularités suivantes:

c)    une articulation à rotule (8) d'appui radial, dont l'élément interne (8a) est monté sur un montant fixe (7) du pied (5) et dont l'élément extérieur (8b) supporte le patin (2), est disposée entre ce patin (2) et le pied (5);
d)    le patin (2) comprend deux éléments identiques (2a, 2b) qui sont destinés à être engagés contre les deux flancs latéraux (4a, 4b) d'une gorge annulaire (4) de l'élément rotatif (3) de machine et qui sont disposés sur les côtés tournés à l'opposé l'un de l'autre de l'élément extérieur (8b) de l'articulation à rotule (8) d'appui radial.

FIG.1

FIG.2